# EUROPEAN PATENT APPLICATION

(11) **EP 3 015 159 A1**
(43) Date of publication of application: **04.05.2016**
(21) Application number: 14817268.7
(22) Date of filing: 20.06.2014
(51) Int. Cl.: B01D 61/10, B01D 61/06, C02F 1/44

(54) **METHOD FOR REGENERATING AMMONIUM BICARBONATE SOLUTION IN FORWARD OSMOTIC PRESSURE TYPE WATER TREATMENT APPARATUS AND REGENERATION APPARATUS THEREFOR**

(30) Priority: 24.06.2013 KR 20130072351
(71) Applicant: TPT Pacific Co., Ltd., Seoul 03162 (KR); Kang, Ki Joon, Goyang-si, Gyeonggi-do 411-743 (KR)
(72) Inventor: KANG, Ki Joon, Gyeonggi-do 10360 (KR); KIM, Je Young, Pohang-si Gyeongsangbuk-do 37837 (KR); KIM, kwang Hyun, Ulsan 44774 (KR); LEE, Ji Sung, Gijang-gun Busan 46017 (KR)
(74) Representative: Nguyen Van Yen, Christian
(86) International application number: PCT/KR2014/005468
(87) International publication number: WO 2014/208936

(57) **Abstract**

According to a method and an apparatus for regenerating an ammonium bicarbonate solution of the present invention, an evaporator, an absorber, and a concentrator, which can separate and concentrate an ammonium bicarbonate solution used as an osmotic solution, are arranged in the type of a tower, so it is possible to prevent precipitation of a salt in the process and continuously regenerate ammonium bicarbonate solution used as an osmotic solution.

## Description

### [Technical Field]

The present invention relates to regenerating an ammonium bicarbonate solution (NH₄HCO₃) used as an osmotic solution in a forward osmotic pressure type water treatment apparatus. More particularly, the present invention relates to a method and an apparatus of regenerating an ammonium bicarbonate solution in a forward osmotic pressure type water treatment apparatus for regenerating an ammonium bicarbonate solution used as an osmotic solution, in a process of restoring water using forward osmotic pressure in order to use the water for desalting seawater, considerably reduce the amount of wastewater, and easily restore chemical substances in wastewater.

### [Background Art]

In general, a method of separating water from seawater, wastewater, and polluted water using forward osmotic pressure has the advantage of a small amount of energy consumption in comparison to a method of separating water using evaporation. An ammonium bicarbonate solution, which is environmentally friendly, may be used as an osmotic solution for this method.

Unless water moved to the ammonium bicarbonate solution by forward osmotic pressure is separated and the ammonium bicarbonate solution is regenerated, it is required to produce an osmotic solution by continuously supplying a carbon-ammonium salt. In order to solve this problem, a separation tower may be used as a method of regenerating an ammonium carbonate solution.

Such a separation tower of the related art evaporates carbon dioxide and ammonia using a heat source at the lower portion and discharges them upward out of the separation tower and there is a need for a condenser to collect the carbon dioxide and the ammonia discharged upward out of the separation tower.

However, a salt is produced by reaction between the carbon dioxide and the ammonia in the condenser, so it is required to increase temperature or clean it with water to prevent solidification of the salt.

Further, when water is separated from an ammonium bicarbonate solution diluted in a process and the gas mixture of carbon dioxide and ammonia containing vapor produces a solid salt by reacting when its temperature drops under a predetermined level, so a pipe is clogged with the solid salt.

The produced gas is a draw solute for fresh water and needs to be converted back into a solution, in which there is a need for a process of condensing the produced water by decreasing temperature. Accordingly, in construction of a large-capacity fresh water system, it is more difficult to remove solid salts or maintain the temperature of pipes, so production of a solid salt has risen as a serious problem.

For example, a method of restoring carbon dioxide and ammonia using a compressor has been disclosed in United States Patent Application Publication No. 2009/0308727 in the related art. However, in this method, a large amount of carbon-ammonium salt is produced, so the compressor cannot continuous work and there is a need for dilution with a large amount of water for continuous working. Accordingly, a large amount of produced water is used and a large amount of electricity is used to operate the compressor.

### [Disclosure]

### [Technical Problem]

The present invention has been made in an effort to solve the problem and an object of the present invention is to provide a method of regenerating an ammonium bicarbonate solution which can continuously regenerate an ammonium bicarbonate solution while preventing precipitation of a salt in a forward osmotic pressure type water treatment apparatus, and an apparatus for regenerating an ammonium bicarbonate solution.

### [Technical Solution]

According to an aspect of the present invention, a method, which is for regenerating an ammonium bicarbonate solution (NH₄HCO₃) used as an osmotic solution in a forward osmotic pressure type water treatment apparatus, includes: separating carbon oxide and ammonia by sending some of a liquid mixture of water separated by a forward osmotic action in a forward osmotic pressure unit and the ammonium bicarbonate solution used as an osmotic solution, into an evaporator and then by heating the liquid mixture; absorbing the carbon dioxide and the ammonia evaporating in the evaporator by sending the other of the liquid mixture into one or a plurality of absorbers; concentrating an ammonium bicarbonate solution, which absorbs the carbon dioxide and the ammonia in the absorber, in one or a plurality of concentrators; and regenerating and supplying at least some of an ammonium bicarbonate solution concentrated in the concentrator as an osmotic solution for the forward osmotic pressure unit by cooling the ammonium bicarbonate solution.

The method may further include cooling the ammonium bicarbonate solution concentrated in the concentrator and then returning some of the ammonium bicarbonate solution to the concentrator.

The method may further include exchanging heat between the liquid mixture supplied to the evaporator and produced water discharged after carbon dioxide and ammonia are separated from the liquid mixture supplied to the evaporator.

The concentration of the ammonium bicarbonate solution in the liquid mixture may be 3 to 5 wt%.

The volumetric ratio of the liquid mixture supplied to the absorber and the liquid mixture supplied to the evaporator may be 0.5 to 4.

The concentration of the ammonium bicarbonate solution in the osmotic solution flowing into the forward osmotic pressure unit may be 5 to 20 wt%.

According to another aspect of the present invention, there is provided an apparatus for regenerating an ammonium bicarbonate solution used as an osmotic solution in a forward osmotic type water treatment apparatus. The method includes: an evaporator that separates carbon dioxide and ammonia by sending some of a liquid mixture of water separated by a forward osmotic action in a forward osmotic pressure unit and the ammonium bicarbonate solution used as an osmotic solution, into an evaporator and then by heating the liquid mixture; one or a plurality of absorbers that receives the other of the liquid mixture and absorbs carbon dioxide and ammonia evaporating in the evaporator; one or a plurality of concentrators that receives and concentrates an ammonium bicarbonate solution absorbing carbon dioxide and ammonia in the absorber; and a regenerating-supplying unit that regenerates and supplies at least some of the ammonium bicarbonate solution concentrated in the concentrator as an osmotic solution for the forward osmotic pressure unit by cooling the ammonium bicarbonate solution.

One or a plurality of sets of the evaporator, the concentrator, and the absorber sequentially arranged upward in the shape of a tower may be arranged in series.

The apparatus may further include a heat exchanger that exchanges heat between the liquid mixtures supplied to the evaporator and produced water discharged after carbon dioxide and ammonia are separated from the liquid mixture supplied to the evaporator.

The apparatus may further include one or a plurality of returning units that cools the ammonium bicarbonate solution concentrated in the concentrator and then returns some of the ammonium bicarbonate solution to the concentrator.

The apparatus may further include a washing unit that is disposed over the absorber and performs washing with supplied washing water.

### [Advantageous Effects]

According to a method and an apparatus for regenerating an ammonium bicarbonate solution of the present invention, since there are provided an evaporator, an absorber, and a concentrator arranged in the shape of a tower and capable of separating and concentrating an ammonium bicarbonate solution used as an osmotic solution, it is possible to prevent a salt from being produced in the process and continuously regenerate an ammonium bicarbonate solution used as an osmotic solution.

### [Description of Drawings]

FIG. 1 is a flowchart illustrating a method of regenerating an ammonium bicarbonate solution according to an embodiment of the present invention.
FIG. 2 is a diagram illustrating an apparatus for regenerating an ammonium bicarbonate solution which can achieve the method of regenerating an ammonium bicarbonate solution illustrated in FIG. 1.
FIG. 3 is a diagram illustrating a modification with a plurality of absorbers and concentrators from the apparatus for regenerating an ammonium bicarbonate solution illustrated in FIG. 2.

### [Best Mode]

Hereinafter, preferred embodiments of the present invention will be described with reference to the accompanying drawings.

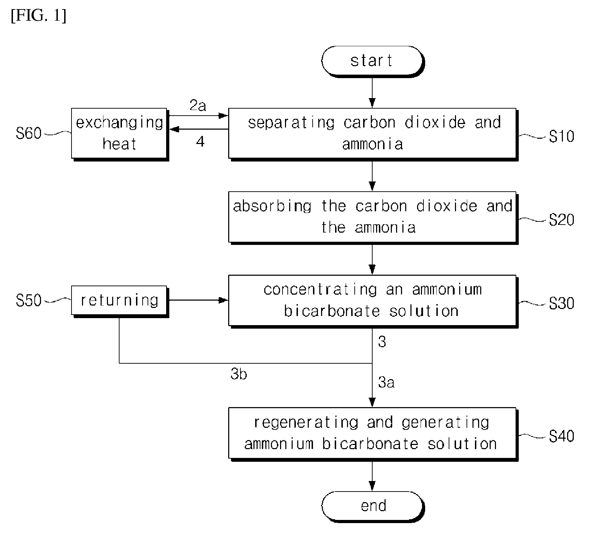

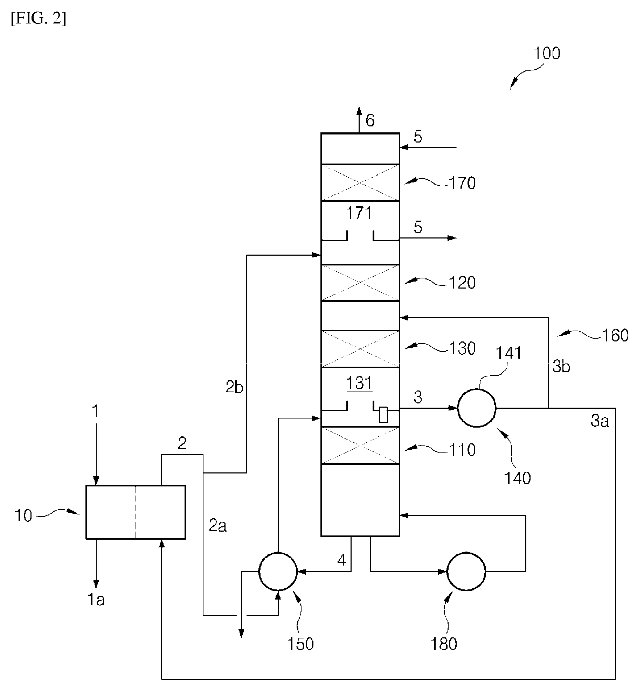

FIG. 1 is a flowchart illustrating a method of regenerating an ammonium bicarbonate solution according to an embodiment of the present invention and FIG. 2 is a diagram illustrating an apparatus for regenerating an ammonium bicarbonate solution which can achieve the method of regenerating an ammonium bicarbonate solution illustrated in FIG. 1.

Referring to the figures, a forward osmotic pressure type water treatment apparatus of the present invention is equipped with a forward osmotic pressure unit 10 having a translucent separator therein. When water 1 to be processed such as seawater, wastewater, and polluted water and an ammonium bicarbonate solution are separately put into the forward osmotic pressure unit 10 with the translucent separator therebetween, water in the water 1 to be processed is moved to and mixed with the ammonium bicarbonate solution by an osmotic action due to a difference in ionic strength and the processed water 1a is discharged outside.

The method of regenerating an ammonium bicarbonate solution according to an embodiment of the present invention is a method for regenerating an ammonium bicarbonate solution (NH₄HCO₃) used as an osmotic solution, as described above. To this end, the method of regenerating an ammonium bicarbonate solution includes separating (S10), absorbing (S20), a concentrating (S30), and regenerating-supplying (S40).

First, the separating (S10) is a process of separating and evaporating carbon dioxide and ammonia by sending some 2a of a liquid mixture 2 of the water separated by the forward osmotic action in the forward osmotic pressure unit 10 and the ammonium bicarbonate solution used as an osmotic solution, into an evaporator 110 and then by heating it. A heater 180 heats the liquid mixture 2a in the evaporator 110.

Produced water 4 obtained by separation and evaporation of the carbon dioxide and the ammonia from the liquid mixture 2a is discharged outside. In order to improve energy efficiency of the heater 180, it is possible to reduce energy consumed by the heater 180 by exchanging heat between the produced water 4 and the liquid mixture 2a from the evaporator 110 (S60).

Next, the absorbing (S20) is a process of absorbing the carbon dioxide and the ammonia evaporating in the evaporator 110 by sending the other 2b of the liquid mixture 2 into an absorber 120. The volumetric ratio of the liquid mixture 2b supplied to the absorber 120 and the liquid mixture 2a supplied to the evaporator 110 is 0.5 to 4, but it may depend on the height of the absorber 120, the mole numbers of the carbon dioxide and the ammonia evaporated from the liquid mixture 2a put into the evaporator 110, and desired concentration of ammonium carbonate in the osmotic solution.

Next, the concentrating (S30) is a process of sending the ammonium bicarbonate solution absorbing the carbon dioxide and the ammonia in the absorber 120 into a concentrator 130 and concentrating it therein.

Finally, the regenerating-supplying (S40) is a process of regenerating and supplying at least some 3a of the ammonium bicarbonate solution 3 concentrated in the concentrator 130 as an osmotic solution for the forward osmotic pressure unit 10 by cooling the ammonium bicarbonate solution 3. The amount of ammonia and carbon dioxide lost with the produced water 4 and an exhaust gas 6 is very small, and a carbon-ammonium powder, ammonia, and carbon dioxide for the loss may be supplemented at appropriate timings in the process of regenerating an osmotic solution.

The other 3b of the concentrated ammonium bicarbonate solution 3 can be returned to the concentrator 130 (S50) and concentrated in desired concentration. The temperature of the ammonium bicarbonate solution 3 returned to the concentrator 130 may be set to minimize the energy consumed by a cooler 141.

Further, for efficient absorption of a carbon-ammonium salt without precipitation in the absorber 120 and the concentrator 130, the concentration of the ammonium bicarbonate solution in the liquid mixture 2 of the water separated by a forward osmotic action and the ammonium bicarbonate solution used as an osmotic solution may be 3 to 5 wt%. However, the concentration of the ammonium bicarbonate solution in the liquid mixture 2 may depend on the density of salt(NaCl) in seawater, the concentration of contaminants in the water 1 to be processed, and the capacity of the forward osmotic pressure unit 10.

Further, the concentration of the ammonium bicarbonate solution in the osmotic solution flowing into the forward osmotic pressure unit 10 may be 5 to 20 wt%. This is because when the concentration of the ammonium bicarbonate solution in the osmotic solution is lower than 5 wt%, a small amount of water is obtained in the forward osmotic pressure unit 10, and when it is higher than 20 wt%, a carbon-ammonium salt is formed and may influence the process.

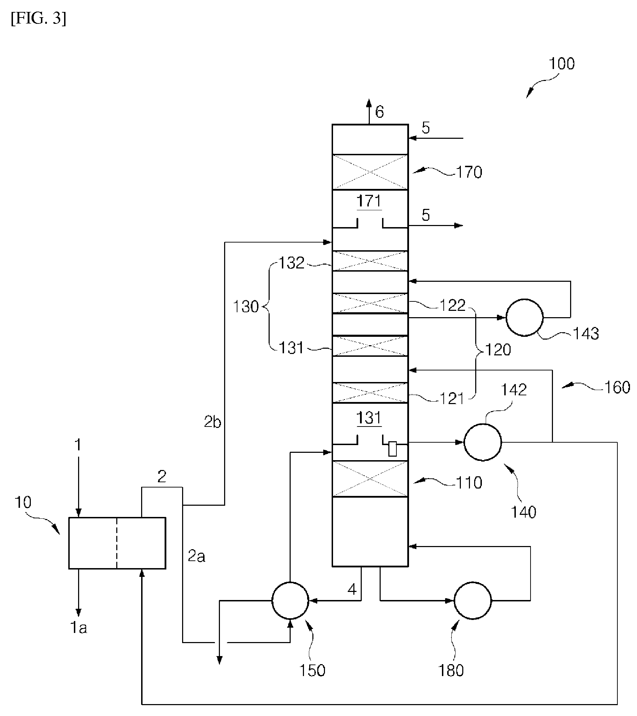

In the method of regenerating an ammonium bicarbonate solution described above, one absorber 120 and one concentrator 130 were exemplified. However, a plurality of absorbers 120 and concentrators 130 may be provided, and for describing this configuration, FIG. 3 illustrates a modification with two absorbers 120 and two concentrators 130. The configuration illustrated in FIG. 3, however, is also an example and three or more absorbers 120 and concentrators 130, respectively, may be provided.

The absorber 120 and the concentrator 130 may be, as illustrated in the figure, composed of first and second absorbers 121 and 122 and first and second concentrators 131 and 132, respectively, which are alternately disposed to correspond to available temperature of cooling water of coolers 142 and 143.

The solubility of the carbon-ammonium salt referred in the embodiment described above is as follows (Table 2-120, Perry's Chemical Engineers' Handbook, 1999, McGraw-Hill).

| | | | | |
|---|---|---|---|---|
| Temperature (°C) | 0 | 10 | 20 | 30 |
| Density of NH₃HCO₃ (wt%) | 10.6 | 13.6 | 17.3 | 21.2 |

Hereinafter, an apparatus for regenerating an ammonium bicarbonate solution which can achieve the method of regenerating an ammonium bicarbonate solution of the present invention is described. However, the same configuration as that described above in relation to the method is not described.

Referring to FIG. 2, an apparatus for regenerating an ammonium bicarbonate solution of the present invention includes an evaporator 110, an absorber 120, a concentrator 130, and regenerating-supplying unit 140.

First, the evaporator 110 separates carbon dioxide and ammonia by heating some 2a of the water separated by the forward osmotic action in a forward osmotic pressure unit 10 and a liquid mixture 2 with the ammonium bicarbonate solution used as an osmotic solution into the evaporator 110. Produced water 4 obtained by separation and evaporation of the carbon dioxide and the ammonia from the liquid mixture 2a is discharged outside. In order to improve energy efficiency of a heater 180, it is possible to reduce energy consumed by the heater 180, using a heat exchanger 150 for heat exchange between the produced water 4 and the liquid mixture 2a from the evaporator 110.

The absorber 120 receives the other 2b of the liquid mixture 2 and absorbs carbon dioxide and ammonia evaporating in the evaporator 110.

The concentrator 130 receives and concentrates an ammonium bicarbonate solution absorbing carbon dioxide and ammonia in the absorber 120.

The regenerating-supplying unit 140 regenerates and supplies at least some 3a of the ammonium bicarbonate solution 3 concentrated in the concentrator 130 as an osmotic solution for the forward osmotic pressure unit 10 by cooling the ammonium bicarbonate solution 3. The apparatus further includes a returning unit 160 that returns the other 3b of the concentrated ammonium bicarbonate solution 3 to the concentrator 130 and can concentrate the ammonium bicarbonate solution 3b in desired density.

Further, as described above, a plurality of absorbers 120 and concentrators 130 may be provided.

In the embodiment of the present invention, as illustrated in the figure, the evaporator 110, the concentrator 130, and the absorber 120 may be sequentially arranged upward in the shape of a tower. Further, if necessary, a plurality of sets of the evaporator 110, the concentrator 130, and the absorber 120 sequentially arranged upward may be disposed in series in consideration of the installation space and the cost to be invested.

On the other hand, a washing unit 170 may be disposed over the absorber 120 to prevent environmental pollution. The washing unit 170 performs washing with supplied washing water 5. The water discharged out of the washing unit 170 may be sent to the absorber 120 or discharged outside.

As described above, a method and an apparatus for regenerating an ammonium bicarbonate solution according to an embodiment of the present invention, since there are provided the evaporator 110, the absorber 120, and the concentrator 130 arranged in the shape of a tower and capable of separating and concentrating an ammonium bicarbonate solution used as an osmotic solution, it is possible to prevent a salt from being produced in the process and continuously regenerate an ammonium bicarbonate solution used as an osmotic solution.

Although the present invention has been described with reference to the embodiments illustrated in the drawings, those are only examples and may be changed and modified into other equivalent embodiments from the present invention by those skilled in the art. Therefore, the technical protective scope of the present invention should be determined by the scope described in claims.

## Claims

1. A method of regenerating an ammonium bicarbonate solution (NH₄HCO₃) used as an osmotic solution in a forward osmotic type water treatment apparatus, the method comprising:
separating (S10) carbon dioxide and ammonia by sending some (2a) of a liquid mixture (2) of water separated by a forward osmotic action in a forward osmotic pressure unit (10) and the ammonium bicarbonate solution used as an osmotic solution, into an evaporator (110) and then by heating the liquid mixture;
absorbing (S20) the carbon dioxide and the ammonia evaporating in the evaporator (110) by sending the other (2b) of the liquid mixture (2) into one or a plurality of absorbers (120);
concentrating (S30) an ammonium bicarbonate solution, which absorbs the carbon dioxide and the ammonia in the absorber (120), in one or a plurality of concentrators (130); and
regenerating and generating (S40) at least some 3a of an ammonium bicarbonate solution (3) concentrated in the concentrator (130) as an osmotic solution for the forward osmotic pressure unit (10) by cooling the ammonium bicarbonate solution (3).

2. The method of claim 1, further comprising cooling the ammonium bicarbonate solution (3) concentrated in the concentrator (130) and then returning (S50) some (3b) of the ammonium bicarbonate solution (3) to the concentrator (130).

3. The method of claim 1, further comprising exchanging heat (S60) between the liquid mixture supplied to the evaporator (110) and produced water (4) discharged after carbon dioxide and ammonia are separated from the liquid mixture (2a) supplied to the evaporator (110).

4. The method of any one of claims 1 to 3, wherein the concentration of the ammonium bicarbonate solution in the liquid mixture (2) is 3 to 5 wt%.

5. The method of any one of claims 1 to 3, wherein the volumetric ratio of the liquid mixture (2b) supplied to the absorber (120) and the liquid mixture (2a) supplied to the evaporator (110) is 0.5 to 4.

6. The method of any one of claims 1 to 3, wherein the concentration of the ammonium bicarbonate solution in the osmotic solution flowing into the forward osmotic pressure unit (10) is 5 to 20 wt%.

7. An apparatus (100) for regenerating an ammonium bicarbonate solution used as an osmotic solution in a forward osmotic pressure type water treatment apparatus, the apparatus comprising:
an evaporator (110) that separates carbon dioxide and ammonia by sending some (2a) of a liquid mixture (2) of water separated by a forward osmotic action in a forward osmotic pressure unit (10) and the ammonium bicarbonate solution used as an osmotic solution, into an evaporator (110) and then by heating the liquid mixture;
one or a plurality of absorbers (120) that receives the other (2a) of the liquid mixture (2) and absorbs carbon dioxide and ammonia evaporating in the evaporator (110);
one or a plurality of concentrators (130) that receives and concentrates an ammonium bicarbonate solution absorbing carbon dioxide and ammonia in the absorber (120); and
a regenerating-supplying unit (140) that regenerates and supplies at least some (3a) of the ammonium bicarbonate solution (3) concentrated in the concentrator (130) as an osmotic solution for the forward osmotic pressure unit (10) by cooling the ammonium bicarbonate solution (3).

8. The apparatus of claim 7, wherein one or a plurality of sets of the absorbers (120) sequentially arranged upward in the shape of a tower is arranged in series.

9. The apparatus of claim 7 or 8, further comprising a heat exchanger that exchanges heat between the liquid mixture supplied to the evaporator (110) and produced water (4) discharged after carbon dioxide and ammonia are separated from the liquid mixture (2a) supplied to the evaporator (110).

10. The apparatus of claim 7 or 8, further comprising one or a plurality of returning units (160) that cools the ammonium bicarbonate solution (3) concentrated in the concentrator (130) and then returns some (3b) of the ammonium bicarbonate solution (3) to the concentrator (130).

11. The apparatus of claim 7 or 8, further comprising a washing unit (170) that is disposed over the absorber (120) and performs washing with a supplied washing water (5).
